# EUROPÄISCHE PATENTSCHRIFT

(11) **EP 3 289 881 B1**
(45) Veröffentlichungstag und Bekanntmachung des Hinweises auf die Patenterteilung: **20.02.2019**
(21) Anmeldenummer: 17172259.8
(22) Anmeldetag: 22.05.2017
(51) Int. Cl.: A22C 11/08, B65B 3/04

(54) **VERFAHREN UND FÜLLMASCHINE ZUM ABFÜLLEN EINES LEBENSMITTELS**
METHOD AND DEVICE FOR FILLING OF FOODSTUFFS
PROCÉDÉ ET DISPOSITIF DE REMPLISSAGE DE PRODUITS ALIMENTAIRES

(30) Priorität: 06.09.2016 DE 102016216851
(43) Veröffentlichungstag der Anmeldung: 07.03.2018
(73) Patentinhaber: Albert Handtmann Maschinenfabrik GmbH & Co. KG, 88400 Biberach (DE)
(72) Erfinder: Staudenrausch, Martin, 88400 Biberach (DE); Kloos, Daniel, 88400 Ringschnait (DE)
(74) Vertreter: Grünecker Patent- und Rechtsanwälte PartG mbB

(56) Entgegenhaltungen:
- EP-A1- 2 189 063
- US-A- 3 178 066
- US-A1- 2007 212 994

## Beschreibung

Die Erfindung betrifft ein Verfahren zum Abfüllen eines Lebensmittels sowie eine Füllmaschine gemäß den Oberbegriffen der Ansprüche 1 und 11.

Zum Abfüllen von Lebensmitteln, insbesondere zum Herstellen von Würsten, werden sogenannte Füllmaschinen verwendet. Dabei wird das Lebensmittel in einen Trichter der Füllmaschine gefüllt, am unteren Ende des Trichters mittels Förderwerk in ein Füllorgan, z.B. ein Füllrohr, transportiert und z.B. in eine Wursthülle ausgestoßen. Das Lebensmittel kann auch beispielsweise in Behältnisse, z.B. Schalen etc., abgefüllt werden.

US3178066 beschreibt ein Verfahren zum Abfüllen eines Lebensmittels, das mindestens zwei zu vermischende Komponenten aufweist, wobei das Lebensmittel in einen Fülltrichter einer Füllmaschine gefüllt und mit einer Mischkurve durchmischt wird, wobei die Mischkurve über einen eigenen Antrieb angetrieben wird, während das Lebensmittel aus dem unteren Bereich des Fülltrichters über ein Förderwerk gefördert und über ein Füllorgan abgefüllt wird.

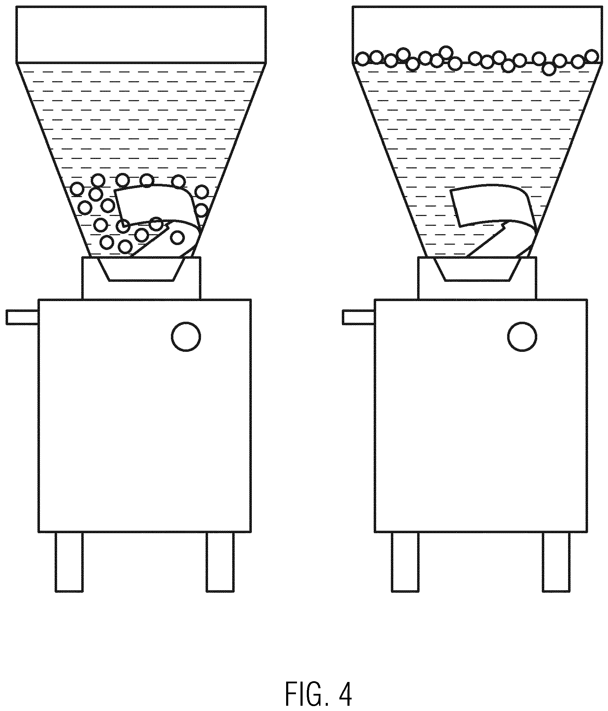

Beim Abfüllen von Massen mit Fest- und Flüssigkeitsanteil können sich die festen Bestandteile von der flüssigen Masse trennen bzw. entmischen, wie beispielsweise in Fig. 4 dargestellt wird. Dabei können sich die festen Bestandteile im unteren Bereich des Trichters absetzen oder aber an der Oberfläche der flüssigen Masse aufschwimmen. Dies ist abhängig von der Dichte der flüssigen Masse sowie der Dichte und dem Volumen der festen Einlagen bzw. Bestandteile. Wie aus Fig. 4 hervorgeht, kommt es also bei der Herstellung von Lebensmittel, die einen vorbestimmten Anteil von stückigen Einlagen in Flüssigkeit umfassen, zu erheblichen Problemen. Solche Lebensmittel sind beispielsweise Würste mit Fleisch und/oder Gemüseeinlagen in Aspik, Gulaschsuppe oder Fischsalate etc.

Lassen sich die festen Bestandteile in der Flüssigkeit nicht ausreichend gut vermischen und homogen verteilen, werden gemäß dem Stand der Technik die Produkte meist wie folgt hergestellt:
- Die fertige Mischung wird mit Schöpfkellen oder ähnlichen Werkzeugen manuell in Därme, Schalen, Tiefziehanlagen oder sonstige Behältnisse gefüllt. Das Mischungsverhältnis wird dabei visuell vom Abfüller kontrolliert oder
- die Einlagen werden zuerst getrennt vom Flüssigkeitsanteil in das Behältnis gefüllt (manuell oder maschinell), wobei die Einlagen über eine Waage kontrolliert werden können. Danach wird mit dem Flüssigkeitsanteil das Behältnis aufgefüllt. Dies kann über ein bestimmtes Volumen ebenso manuell oder maschinell durchgeführt werden.

Beide Methoden sind sehr aufwändig, kostenintensiv und es wird nur eine relativ geringe Stundenleistung (kg/h) erreicht.

Hiervon ausgehend liegt der vorliegenden Erfindung die Aufgabe zugrunde, ein Verfahren und eine Füllmaschine zum Abfüllen eines Lebensmittels bereitzustellen, die ein zuverlässiges, einfaches und produktives Abfüllen von Lebensmittel, das mindestens zwei zu vermischende Komponenten aufweist, erlaubt.

Erfindungsgemäß wird diese Aufgabe durch die Merkmale der Ansprüche 1 und 11 gelöst.

Gemäß der vorliegenden Erfindung wird zum Abfüllen eines Lebensmittels, das mindestens zwei zu vermischende Komponenten aufweist, das Lebensmittel in einen Fülltrichter einer Füllmaschine gefüllt und mit einer Mischkurve durchmischt. Dieses Verfahren eignet sich insbesondere zum Herstellen von Würsten. Erfindungsgemäß weist die Mischkurve einen eigenen Antrieb auf, der mit unterschiedlichen Geschwindigkeiten entsprechend einem bestimmten Geschwindigkeitsprofil angetrieben wird, während das Lebensmittel aus dem unteren Bereich des Fülltrichters über ein Förderwerk gefördert und über ein Füllorgan abgefüllt wird.

Das heißt, dass während das Lebensmittel abgefüllt wird, die Mischkurve mit unterschiedlichen Geschwindigkeiten betrieben wird. Das Geschwindigkeitsprofil kann dabei an ein bestimmtes Lebensmittel angepasst werden. Durch die Variation der Geschwindigkeit während des Abfüllens kann ein Aufschwemmen bzw. Vermischen der festen Bestandteile in der Flüssigkeit erreicht werden. Somit kann z.B. eine homogene Verteilung von stückigen Einlagen in einer Flüssigkeit erzielt werden. Dadurch, dass Mischen und Fördern gleichzeitig erfolgt, kann die Produktivität des Verfahrens im Vergleich zum Stand der Technik wesentlich verbessert werden. Auch ein Abfüllen in Wursthülle mittels Füllrohr wird durch das erfindungsgemäße Verfahren möglich.

Gemäß der vorliegenden Erfindung ist während des Abfüllens die Geschwindigkeit der Mischkurve unabhängig von der Geschwindigkeit des Förderwerks. Das heißt, dass sowohl die Mischkurve als auch das Förderwerk getrennte Antriebe aufweisen, deren Geschwindigkeitsprofile nicht voneinander abhängig sind. Dadurch kann das Geschwindigkeitsprofil der Mischkurve exakt an ein zu verarbeitendes Lebensmittel angepasst werden und zwar unabhängig von der Förderleistung und unabhängig von einem Geschwindigkeitsprofil des Förderwerks.

Gemäß einer bevorzugten Ausführungsform ist die Mischkurve kontinuierlich während des Abfüllens im Betrieb. Sie wird über einen bestimmten Zeitraum kontinuierlich mit einer ersten Geschwindigkeit v₁ in einem ersten Geschwindigkeitsbereich angetrieben. Dabei kann die erste Geschwindigkeit in diesem Geschwindigkeitsbereich konstant sein oder aber auch in diesem oberen Geschwindigkeitsbereich variieren. In Intervallen wird diese erste Geschwindigkeit v₁ auf eine zweite Geschwindigkeit v₂, die in einem zweiten niedrigerem Geschwindigkeitsbereich liegt, reduziert, wobei v₂ < v₁ ist. Die Mischkurve kann dann über einen bestimmten Zeitraum mit dieser zweiten Geschwindigkeit betrieben werden. Die zweite Geschwindigkeit kann konstant sein oder aber auch im zweiten Geschwindigkeitsbereich variieren. Durch den regelmäßigen Wechsel von einer hohen auf eine niedrige Geschwindigkeit entsteht eine Sogwirkung nach oben, sodass das Aufschwemmen von Bestandteilen in der Flüssigkeit und somit eine homogene Verteilung wesentlich verbessert werden kann. Gemäß einer bevorzugten Ausführungsform wird die Mischkurve mit einer ersten Geschwindigkeit angetrieben und in bestimmten Zeitintervallen auf eine zweite Geschwindigkeit abgesenkt. Ein entsprechender Betrieb ist einfach zu bewerkstelligen.

Es ist vorteilhaft, wenn die erste Geschwindigkeit (v₁) in einem Zeitraum (t₃-t₂) von 50 ms bis 500 ms abrupt auf die zweite Geschwindigkeit (v₂) gesenkt wird und/oder die zweite Geschwindigkeit (v₂) in einem Zeitraum (t₁-t₀) von 50 ms bis 500 ms abrupt auf die erste Geschwindigkeit (v₁) erhöht wird.

Vorteilhafterweise wird die Geschwindigkeit der Mischkurve abrupt abgesenkt, insbesondere mit einer Verzögerung in einem Bereich von 2-50 U/s ² Durch das abrupte Absenken der Geschwindigkeit der Mischkurve wird das Aufschwemmen bzw. Vermischen der Komponenten weiter begünstigt. Es ist vorteilhaft, wenn nach dem abrupten Absenken der Geschwindigkeit die Geschwindigkeit dann ebenfalls wieder abrupt erhöht wird, insbesondere mit einer Beschleunigung von 2-50 U/s ² Wenn entsprechende Bewegungen im Wechsel erfolgen, ergibt sich eine äußerst homogene Verteilung der Feststoffe, insbesondere im unteren Bereich des Trichters.

Die Paddel der Mischkurve sind vorzugsweise im unteren Bereich des Fülltrichters angeordnet, d.h. vorzugsweise zumindest im unteren Drittel.

Es ist besonders vorteilhaft, wenn die zweite Geschwindigkeit in einem Bereich von 0-50 U/min liegt, vorzugsweise Null ist, d.h. dass die Mischkurve in den bestimmten Intervallen gestoppt wird und dann wieder anläuft, um schließlich wieder mit der ersten Geschwindigkeit im ersten Geschwindigkeitsbereich zu laufen. Es ist auch möglich, dass die zweite Geschwindigkeit nicht nur auf Null abgesenkt wird, sondern dass in bestimmten Intervallen auch die Drehrichtung der Mischkurve geändert wird. Das heißt, dass die Mischkurve gestoppt wird und dann unmittelbar oder nach einer bestimmten Zeitspanne insbesondere abrupt auf eine Geschwindigkeit gebracht wird, wobei die Drehrichtung entgegengesetzt zur Drehrichtung der ersten Geschwindigkeit ist.

Vorzugsweise liegt die erste Geschwindigkeit in einem Bereich von 70 bis 100 % der Maximalgeschwindigkeit der Mischkurve, d.h. in einem oberen Bereich. Insbesondere wird die Mischkurve mit einer Geschwindigkeit v₁ in einem Bereich von 80 bis 150 U/min betrieben.

Das erfindungsgemäße Verfahren ist besonders geeignet für Lebensmittel mit einem Anteil von 5 % bis 50 % (Vol.%) stückige Einlagen in Flüssigkeit.

Das erfindungsgemäße Verfahren ist jedoch ebenfalls geeignet für Lebensmittel, die mindestens zwei pastöse Massen umfassen, die getrennt in den Trichter eingefüllt werden oder die gemeinsam in den Trichter eingefüllt werden und Gefahr laufen sich zu entmischen, wie beispielsweise flüssige Emulsionen, bestehend aus Öl und Wasser.

Die erfindungsgemäße Füllmaschine zum Durchführen des Verfahrens umfasst einen Trichter, ein Förderwerk zum Fördern des Lebensmittels aus dem Trichter in ein Füllorgan, z.B. ein Füllrohr, sowie eine Mischkurve mit einem eigenen Antrieb. Die Füllmaschine weist weiter eine Steuereinrichtung auf, die derart ausgebildet ist, dass mindestens ein Geschwindigkeitsprofil für den Antrieb der Mischkurve gespeichert ist, bzw. gespeichert werden kann. Die Mischkurve wird dann während des Abfüllens kontinuierlich gemäß dem Geschwindigkeitsprofil betrieben und sorgt so für eine homogene Verteilung der zu vermischenden Komponenten des Lebensmittels.

Es ist besonders vorteilhaft, wenn in der Steuereinrichtung bereits mehrere Geschwindigkeitsprofile für unterschiedliche Lebensmittel abgespeichert sind, so dass auf einfache Art und Weise ein passendes Geschwindigkeitsprofil ausgewählt werden kann.

Alternativ dazu kann das Geschwindigkeitsprofil auch manuell angepasst werden.

Insbesondere kann die erste und/oder zweite Geschwindigkeit eingestellt oder angepasst werden. Dabei kann auch die Drehrichtung festgelegt werden, beispielsweise durch ein positives oder negatives Vorzeichen. Insbesondere kann das Zeitintervall (Δt₂) zwischen zwei Geschwindigkeitssenkungen auf die zweite Geschwindigkeit (v₂) und/oder das Zeitintervall zwischen zwei Geschwindigkeitserhöhungen auf die erste Geschwindigkeit (v₁) und/oder die Zeitdauer(Δt₀), in der die Mischkurve mit der ersten Geschwindigkeit ( v₁ ) angetrieben wird und/oder die Zeitdauer(Δt₃), mit der die Mischkurve mit der zweiten Geschwindigkeit (v₂) angetrieben oder gestoppt wird und/oder die Beschleunigung oder Verzögerung, mit der die Geschwindigkeit (v₁, v₂) erhöht oder gesenkt wird, eingestellt werden.

Die Mischkurve umfasst mindestens ein Paddel, das sich im unteren Bereich des Trichters umlaufend im Kreis bewegt. Wenn die Paddel in dem unteren Bereich, z.B. im unteren Drittel angeordnet sind, wird gewährleistet, dass dann, wenn das Förderwerk, beispielsweise die Flügelzellen einer Flügelzellenpumpe, das Lebensmittel im unteren Bereich des Trichters aufnehmen, eine homogene Verteilung gegeben ist.

Vorteilhafterweise liegt das Zeitintervall zwischen zwei Geschwindigkeitssenkungen auf die 2. Geschwindigkeit (v₂) in einem Bereich von 0,5 bis 5 s vorzugsweise 0,3 s bis 2 s Bei entsprechend kurzen Zeitintervallen kann ein perfektes Aufmischen realisiert werden. Die Erfindung wird nachfolgend unter Bezugnahme folgender Figuren näher erläutert.
- Fig. 1: zeigt grob schematisch eine Füllmaschine gemäß der vorliegenden Erfindung.
- Fig. 2: zeigt in perspektivischer Darstellung eine teilweise aufgerissene Füllmaschine gemäß der vorliegenden Erfindung.
- Fig. 3: zeigt die Drehzahl einer Mischkurve in Abhängigkeit der Zeit sowie die Förderleistung des Förderwerks in Abhängigkeit der Zeit.
- Fig. 4: zeigt zwei Füllmaschinen gemäß dem Stand der Technik.

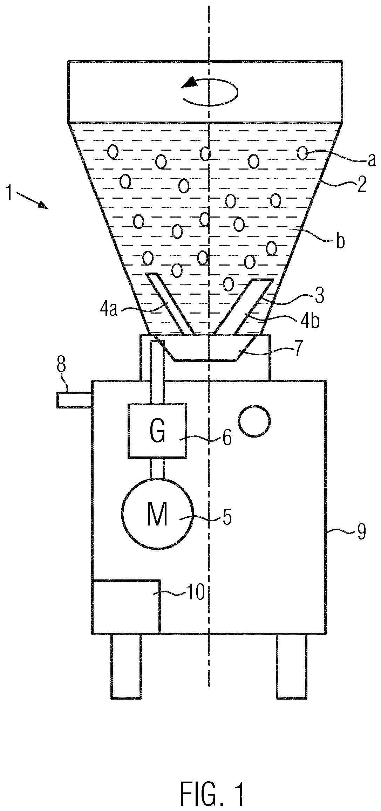

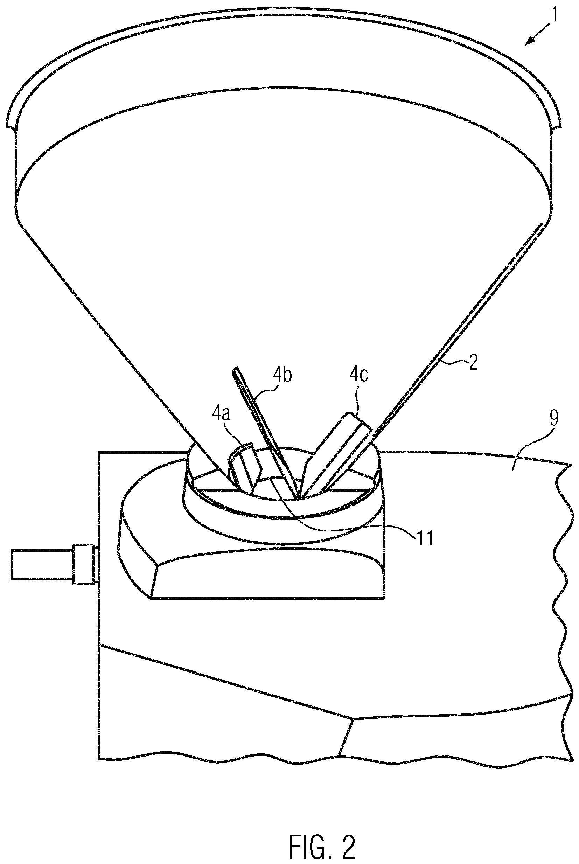

Fig. 1 und 2 zeigen ein Ausführungsbeispiel einer Füllmaschine gemäß der vorliegenden Erfindung.

Die Füllmaschine 1, beispielsweise eine Vakuumfüllmaschine, umfasst einen Trichter 2, der zumindest abschnittsweise konisch nach unten zuläuft.

An das untere Ende des Trichters 2 schließt sich ein nicht dargestelltes Förderwerk an, das den Trichterinhalt in ein Füllorgan 8, z.B. ein Füllrohr, transportieren bzw. drücken kann, um ein Lebensmittel, zum Beispiel Wurstbrät in eine Wursthülle, abzufüllen. Das Förderwerk ist beispielsweise eine Flügelzellenpumpe.

Gemäß der vorliegenden Erfindung wird ein Lebensmittel abgefüllt, das mindestens zwei zu vermischende Komponenten aufweist, zum Beispiel ein Lebensmittel, das einen vorbestimmten Anteil stückiger Einlagen a in Flüssigkeit b umfasst. Der Volumenanteil der stückigen Einlagen im gesamten Lebensmittel liegt vorzugsweise im Bereich von 5 % bis 50 %. Die stückigen Einlagen können z.B. mindestens eine Einlage aus folgender Gruppe umfassen: Fleischstücke, Gemüsestücke, Fischabschnitte, Nudeln etc. Die Flüssigkeit kann eine Flüssigkeit, insbesondere aus folgender Gruppe sein: flüssiges Aspik, Öle, Salatsoßen, Bratensoßen, Suppen, Brühen etc. Die Füllmaschine und das Verfahren sind jedoch genauso geeignet zum Abfüllen von mindestens zwei unterschiedlichen pastösen Massen, die sich entmischen können, z.B. schlecht bindende Emulsionen, Chili con Carne, etc.

Die Füllmaschine 1 umfasst ferner ein Gehäuse 9, in dem ein nicht dargestellter Antrieb für das Förderwerk angeordnet ist. In dem Gehäuse 9 ist auch ein Motor 5 und ein Getriebe 6 für eine Mischkurve 3 vorgesehen. Die Mischkurve 3 ist vorzugsweise im unteren Bereich des Trichters 2, d.h. vorzugsweise im unteren Drittel, angeordnet. Die Mischkurve 3 wird beispielsweise über ein Kegelrad oder eine Stirnverzahnung umlaufend angetrieben. Die Mischkurve weist dabei mindestens ein umlaufendes Paddel 4 auf. Vorzugsweise umfasst die Mischkurve mehrere Paddel, die im Kreis umlaufen. Die Anzahl der Paddel 4, Länge der Paddel und die Anordnung der Paddel kann variabel ausgeführt werden.

Fig. 2 zeigt beispielsweise drei um 120° zueinander versetzt angeordnete Paddel 4a, b, c auf, die hier beispielsweise zwei zueinander unter einem Winkel angeordnete Abschnitte aufweisen, so dass ihr Querschnitt zumindest im oberen Bereich im Wesentlichen L-förmig ausgebildet ist. Unabhängig von der Anzahl und Ausbildung der Paddel ist es vorteilhaft, wenn eine Außenkante der Paddel an der Trichterinnenwand entlanggleitet, wie es insbesondere in dem in Fig. 2 gezeigten Ausführungsbeispiel der Fall ist, da dadurch verhindert werden kann, dass Lebensmittel an der Trichterwand festsetzen. Die Paddel 4a, b, c drehen sich um die Mittelachse M und bringen den Inhalt des Trichters 2 in eine rotierende Bewegung. Würde sich nun die Mischkurve 3 mit konstanter Geschwindigkeit um die Mittelachse M drehen, würde dies dazu führen, dass aufgrund der wirkenden Zentrifugalkräfte die Feststoffe a nach außen in Richtung Innenwand des Trichters 2 gedrückt werden, so dass es zu keiner homogenen Verteilung der Feststoffe a kommt. Gemäß der vorliegenden Erfindung wir daher die Mischkurve mit variierenden Geschwindigkeiten betrieben. Ein entsprechendes Geschwindigkeitsprofil kann in der Steuereinrichtung 10 abgelegt werden. Es ist auch möglich, dass mehrere Geschwindigkeitsprofile für unterschiedliche Lebensmittel in der Steuereinrichtung 10 abgespeichert sind. Die Füllmaschine 1 weist dazu eine nicht dargestellte Einrichtung auf zum Auswählen eines bestimmten Geschwindigkeitsprofils. Dies kann beispielsweise derart erfolgen, dass vom Bediener ein bestimmtes Geschwindigkeitsprofil, dessen Parameter angezeigt werden, ausgewählt wird oder aber dass ein bestimmter Standardprozess oder ein bestimmtes Lebensmittel in die Steuereinrichtung eingegeben wird und die Steuerung das entsprechende Geschwindigkeitsprofil passend dazu auswählt.

Alternativ oder zusätzlich dazu besteht auch die Möglichkeit, dass das Geschwindigkeitsprofil manuell eingegeben bzw. angepasst werden kann, wie nachfolgend noch näher ausgeführt wird.

Die Füllmaschine kann noch eine Hubvorrichtung aufweisen (nicht dargestellt), über die das Lebensmittel beispielsweise mit einem Brätwagen in den Trichter 2 gekippt werden kann. Das Lebensmittel kann auch über ein oder mehrere Beschickungsrohre in den Trichter gegeben werden.

Das erfindungsgemäße Verfahren wird nachfolgend unter Bezugnahme der Fig. 1-3 näher erläutert.

Zunächst wird vor Prozessbeginn ein bestimmtes Geschwindigkeitsprofil für den folgenden Abfüllprozess ausgewählt.

Das Lebensmittel wird dann in den Trichter 2 der Füllmaschine 1 gefüllt. Dabei kann die Mischkurve 3 schon während der Beschickung des Lebensmittels in den Trichter angetrieben werden, um einer Entmischung vorzubeugen.

Die Mischkurve 3 wird über ihren Antrieb 5 entsprechend dem ausgewählten Geschwindigkeitsprofil angetrieben.

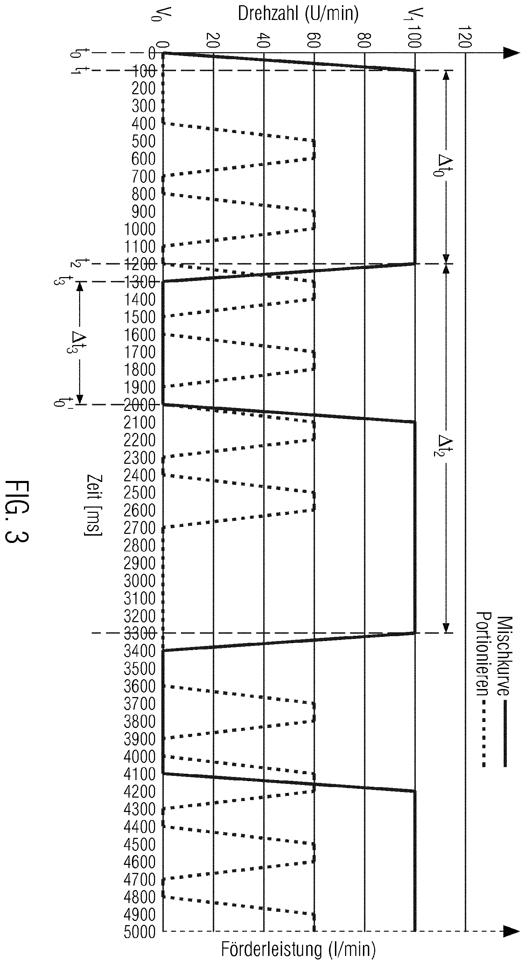

Fig. 3 zeigt ein Beispiel für ein entsprechendes Geschwindigkeitsprofil, wobei hier die Drehzahl der Mischkurve in Abhängigkeit der Zeit aufgetragen ist. Zu einem Zeitpunkt t₀ beträgt die Geschwindigkeit v₂ = 0. Die Geschwindigkeit wird bei t₀ unabhängig vom Füllvorgang auf eine Geschwindigkeit v₁ erhöht, hier beispielsweise auf 100 U/min, wobei die Geschwindigkeit v₁ zu einem Zeitpunkt t₁ erreicht ist. Die Beschleunigung erfolgt hier abrupt mit einer Rate (Steigung der aufsteigenden Flanke) von zum Beispiel 2-50 U/s² wobei hier die Beschleunigungsdauer t₁ - t₀ in einem Bereich von 50-500 ms, insbesondere hier 80 ms- 150 ms liegt, was das Aufschwemmen der Einlagen in der Flüssigkeit begünstigt. Die Zeitdauer t₁-t₀ liegt beispielsweise ebenfalls in einem Bereich von 50-500 ms, insbesondere zum Beispiel hier in einem Bereich von 80 ms bis 150 ms. Die Mischkurve wird dann eine Zeitspanne von Δt₀ = t₂-t₁ z. B. 0,8 s - 1,5 s mit dieser ersten Geschwindigkeit v₁ betrieben. Hier beträgt die Geschwindigkeit v₁ beispielsweise 80 - 150 U/min. Die Geschwindigkeit kann wie hier gezeigt ist konstant sein aber auch in dem oben genannten Geschwindigkeitsbereich variieren. Die Mischkurve wird zu einem Zeitpunkt t₂ abgebremst und zwar auf eine zweite Geschwindigkeit v₂, die in einem zweiten Geschwindigkeitsbereich liegt, wobei v₂ < v₁, und wird vorzugsweise gestoppt (v₂ = 0). Die zweite Geschwindigkeit wird zu einem Zeitpunkt t₃ erreicht. Der zweite Geschwindigkeitsbereich liegt beispielsweise in einem Bereich von 0 bis 50 U/min, wobei auch hier die 2. Geschwindigkeit konstant sein kann oder aber in dem zuvor genannten Bereich variieren kann. Auch hier erfolgt das Absenken der Geschwindigkeit abrupt, d.h. mit einer Verzögerung (Steigung der abfallenden Flanke) von zum Beispiel 2-50 U/s ², wobei zum Beispiel t₃ -t₂ 50 ms bis 500 ms betragen kann. Wie bereits erläutert, verbessert die abrupte Geschwindigkeitsänderung das Aufschwemmen der Feststoffe insbesondere im unteren Bereich des Trichters. Die Geschwindigkeit wird dann beispielsweise über eine Zeitspanne Δt₃ = t_{0'} - t₃ mit der Geschwindigkeit v₂ betrieben oder aber gestoppt. Hier endet der erste Zyklus. Ein entsprechender Zyklus kann kontinuierlich wiederholt werden. Die Dauer Δt₂ vom Beginn einer abfallenden Geschwindigkeitsflanke zum Beginn der abfallenden Geschwindigkeitsflanke eines folgenden Zyklus beträgt etwa 0,5 s bis 5 s.

Aufgrund der schnellen Abfolge der sich abrupt ändernden Geschwindigkeiten kann sichergestellt werden, dass auch bei höheren Feststoffanteilen eine ausreichende Durchmischung gewährleistet wird. Während die Mischkurve mit dem bestimmten Geschwindigkeitsprofil betrieben wird, läuft gleichzeitig das Förderwerk und fördert das Lebensmittel aus dem unteren Bereich des Trichters in das Füllorgan 8. Die gepunktete Linie stellt die Portionsleistung in Abhängigkeit der Zeit dar. Wie aus Fig. 3 deutlich wird, läuft das Förderwerk portionsweise, d.h. intermittierend, wobei jeweils eine Portion, also eine vorbestimmte Menge, aus dem Füllorgan ausgestoßen wird und dann das Förderwerk stillsteht. Während dieser Stillstandszeit kann beispielsweise ein Abdrehen einer Wursthülle erfolgen. Dies ist jedoch nur ein Beispiel für einen Füllprozess. Ein Abfüllvorgang kann auch kontinuierlich erfolgen. Die Fig. 3 verdeutlicht jedoch, dass das Geschwindigkeitsprofil, d.h. die Drehzahl in Abhängigkeit der Zeit, mit dem die Mischkurve 3 angetrieben ist, unabhängig von dem Geschwindigkeitsprofil des Förderwerks ist.

Das heißt also, dass hier die Mischkurve 3 kontinuierlich mit einer ersten Geschwindigkeit v₁ in einem ersten Geschwindigkeitsbereich angetrieben wird und die Geschwindigkeit v₁ in Intervallen Δt₂ auf eine zweite Geschwindigkeit v₂ in einem zweiten Geschwindigkeitsbereich reduziert wird, wobei v₂ < v₁ ist und vorzugsweise v₂ = 0. Es ist jedoch auch möglich, dass sich die Drehrichtung der Mischkurve in bestimmten Intervallen ändert. Das heißt, dass die Mischkurve zunächst gestoppt wird und sich dann in die entgegengesetzte Richtung dreht, um schließlich wieder gestoppt zu werden, um sich wieder in die erste Richtung zu drehen.

Es besteht auch die Möglichkeit, dass das Geschwindigkeitsprofil manuell angepasst werden kann, wobei insbesondere die erste und/oder zweite Geschwindigkeit v₁ oder v₂ bzw. die Geschwindigkeitsbereiche angepasst werden können. Es ist auch möglich, dass das Zeitintervall Δt₂ eingestellt werden kann und/oder die Zeitdauern Δt₀ und/oder Δt₃ bzw. entsprechende Parameter t₀, t₁, t₂, t₃. Das heißt, dass auch die Beschleunigung oder die Verzögerung einstellbar ist. Die Möglichkeit des Einstellens oder Nachstellens ist insbesondere deshalb vorteilhaft, da eine Korrektur möglich ist, wenn ein Bediener bemerkt, dass die Mischung nicht ausreichend ist. Dann kann beispielsweise die Zeitdauer Δt₂ verkürzt werden oder aber auch die Beschleunigung oder Verzögerung der Mischkurve beim Erhöhen oder Senken der Geschwindigkeit entsprechend angepasst werden. Bei dem Einsatz der Mischkurve 3 kann auf eine Gegenhaltekurve verzichtet werden. Es ist aber auch möglich, dass die Strömung im Trichter über ein stehendes Paddel, das z.B. an den Trichtersäulen oder am Trichter befestigt ist und gehalten wird, beeinflusst wird.

## Patentansprüche

1. Verfahren zum Abfüllen eines Lebensmittels, das mindestens zwei zu vermischende Komponenten (a, b) aufweist, insbesondere zur Wurstherstellung,
wobei das Lebensmittel in einen Fülltrichter (2) einer Füllmaschine (1) gefüllt und mit einer Mischkurve (3) durchmischt wird, **dadurch gekennzeichnet, dass**
die Mischkurve (3) über einen eigenen Antrieb (5) mit unterschiedlichen Geschwindigkeiten entsprechend einem bestimmten Geschwindigkeitsprofil angetrieben wird, während das Lebensmittel aus dem unteren Bereich des Fülltrichters (2) über ein Förderwerk gefördert und über ein Füllorgan (8) abgefüllt wird.

2. Verfahren nach Anspruch 1, **dadurch gekennzeichnet, dass** das Geschwindigkeitsprofil der Mischkurve unabhängig vom Geschwindigkeitsprofil des Förderwerks (3) ist.

3. Verfahren nach mindestens einem der Ansprüche 1-2, **dadurch gekennzeichnet, dass** die Mischkurve (3) kontinuierlich mit einer ersten Geschwindigkeit (v₁) in einem ersten Geschwindigkeitsbereich angetrieben wird und die Geschwindigkeit (v₁) in Intervallen (Δt₂) auf eine zweite Geschwindigkeit (v₂) in einem zweiten Geschwindigkeitsbereich reduziert wird, wobei (v₂ < v₁) ist, wobei die erste und/oder zweite Geschwindigkeit entweder konstant ist oder jeweils in den ersten oder zweiten Geschwindigkeitsbereich variiert.

4. Verfahren nach mindestens einem der Ansprüche 1-3, **dadurch gekennzeichnet, dass** die Parameter des Geschwindigkeitsprofils in Abhängigkeit des Lebensmittels verändert werden, wobei insbesondere
die erste und/oder zweite Geschwindigkeit (v₁, v₂), und/oder
das Zeitintervall (Δt₂) zwischen zwei Geschwindigkeitssenkungen auf die zweite Geschwindigkeit (v₂) und/oder
das Zeitintervall zwischen zwei Geschwindigkeitserhöhungen auf die erste Geschwindigkeit (v₁) und/oder
die Zeitdauer(Δt₀), in der die Mischkurve mit der ersten Geschwindigkeit (v₁) angetrieben wird und/oder
die Zeitdauer(Δt₃), mit der die Mischkurve mit der zweiten Geschwindigkeit (v₂) angetrieben oder gestoppt wird und/oder
die Beschleunigung oder Verzögerung, mit der die Geschwindigkeit (v₁, v₂) erhöht oder gesenkt wird,
eingestellt werden.

5. Verfahren nach Anspruch 3 oder 4, **dadurch gekennzeichnet, dass**
die erste Geschwindigkeit (_{V1}) in einem Zeitraum (t₃-t₂) von 50 ms bis 500 ms abrupt auf die zweite Geschwindigkeit (v₂) gesenkt wird und/oder die zweite Geschwindigkeit (v₂) in einem Zeitraum (t₁-t₀) von 50 ms bis 500 ms abrupt auf die erste Geschwindigkeit (v₁) erhöht wird.

6. Verfahren nach mindestens einem der Ansprüche 3-5, **dadurch gekennzeichnet, dass** v₂ in einem Bereich von 0-50 U/min liegt, wobei insbesondere v₂ = 0 , und/oder
die erste Geschwindigkeit (v₁) in einem Bereich von 70 - 100 % der Maximalgeschwindigkeit der Mischkurve (3) liegt, insbesondere in einem Bereich von 80 bis 150 U/min.

7. Verfahren nach mindestens einem der vorhergehenden Ansprüche, **dadurch gekennzeichnet, dass** die Drehrichtung der Mischkurve (3) in bestimmten Intervallen (Δt₂) geändert wird.

8. Verfahren nach mindestens einem der vorhergehenden Ansprüche, **dadurch gekennzeichnet, dass** die Geschwindigkeit (v₁) der Mischkurve (3) abrupt abgesenkt wird, insbesondere mit einer Verzögerung in einem Bereich von 2 - 50 U/s²und/oder die Geschwindigkeit (v₂) abrupt erhöht wird, insbesondere mit einer Beschleunigung von 2 - 50 U/s ².

9. Verfahren nach mindestens einem der vorhergehenden Ansprüche, **dadurch gekennzeichnet, dass** das Lebensmittel 5 % bis 50 % stückige Einlagen (a) in Flüssigkeit (b) umfasst.

10. Verfahren nach mindestens einem der Ansprüche 1-8, **dadurch gekennzeichnet, dass** das Lebensmittel mindestens zwei pastöse Massen (a, b) umfasst.

11. Füllmaschine zum Durchführen des Verfahrens nach mindestens einem der Ansprüche 1-10 mit einem Trichter (2), einem Förderwerk zum Fördern des Lebensmittels aus dem Trichter (2) in ein Füllorgan (8) sowie eine Mischkurve (3) mit einem eigenen Antrieb (5), **gekennzeichnet durch**
eine Steuereinrichtung (10), in der mindestens ein Geschwindigkeitsprofil für den Antrieb (5) der Mischkurve (3) gespeichert ist.

12. Füllmaschine (1) nach Anspruch 11, **dadurch gekennzeichnet, dass** in der Steuereinrichtung (10) mehrere Geschwindigkeitsprofile für unterschiedliche Lebensmittel abgespeichert sind.

13. Füllmaschine (1) nach Anspruch 12, **dadurch gekennzeichnet, dass**
die Füllmaschine (1) eine Einrichtung umfasst zum Auswählen eines bestimmten Geschwindigkeitsprofils und/oder
eine Einrichtung mit der das Geschwindigkeitsprofil manuell eingestellt oder angepasst werden kann, insbesondere
die erste und/oder zweite Geschwindigkeit (v₁, v₂), und/oder
das Zeitintervall (Δt₂) zwischen zwei Geschwindigkeitssenkungen auf die zweite Geschwindigkeit (v₂) und/oder
das Zeitintervall zwischen zwei Geschwindigkeitserhöhungen auf die erste Geschwindigkeit (v₁) und/oder
die Zeitdauer(Δt₀), in der die Mischkurve mit der ersten Geschwindigkeit (v₁) angetrieben wird und/oder
die Zeitdauer(Δt₃), mit der die Mischkurve mit der zweiten Geschwindigkeit (v₂) angetrieben oder gestoppt wird und/oder
die Beschleunigung oder Verzögerung, mit der die Geschwindigkeit (v₁, v₂) erhöht oder gesenkt wird,
eingestellt werden kann.

14. Füllmaschine (1) nach mindestens einem der Ansprüche 11-13, **dadurch gekennzeichnet, dass** die Mischkurve (3) mindestens ein Paddel (4a,b,c) umfasst, das sich im unteren Bereich (11) des Trichters (2) umlaufend im Kreis bewegt.

15. Verfahren nach mindestens einem der Ansprüche 1-10, **dadurch gekennzeichnet, dass** das Zeitintervall (Δt₂) zwischen zwei abrupten Geschwindigkeitssenkungen in einem Bereich von 0,5 s bis 5 s liegt.

## Claims

1. A method for filling a foodstuff which comprises at least two components (a, b) to be mixed, particularly for sausage production,
wherein the foodstuff is filled into a filling hopper (2) of a filling machine (1) and thoroughly mixed with a mixing cam (3), **characterized in that**
the mixing cam (3) is driven via its own drive (5) at different speeds according to a specific speed profile while the foodstuff is conveyed out of the lower portion of the filling hopper (2) via a conveying mechanism and is filled via a filling unit (8).

2. The method according to claim 1, **characterized in that** the speed profile of the mixing cam is independent of the speed profile of the conveying mechanism (3).

3. The method according to at least one of claims 1 to 2, **characterized in that** the mixing cam (3) is driven continuously at a first speed (v₁) in a first speed range and the speed (v₁) is reduced at intervals (Δt₂) to a second speed (v₂) in a second speed range, where (v₂ < v₁), wherein the first and/or the second speed is either constant or respectively varies in the first or second speed range.

4. The method according to at least one of claims 1 to 3, **characterized in that** the parameters of the speed profile are changed in response to the foodstuff, wherein particularly
the first and/or the second speed (v₁, v₂), and/or
the time interval (Δt₂) between two speed reductions to the second speed (v₂) and/or
the time interval between two speed increases to the first speed (v₁) and/or
the time period (Δt₀) in which the mixing cam is driven at the first speed (v₁) and/or
the time period (Δt₃) in which the mixing cam is driven at the second speed (v₂) or stopped and/or
the acceleration or deceleration with which the speed (v₁, v₂) is increased or lowered are adjusted.

5. The method according to claim 3 or 4, **characterized in that**
the first speed (v₁) is abruptly lowered to the second speed (v₂) within a period (t₃-t₂) of 50 ms to 500 ms and/or the second speed (v₂) is abruptly increased to the first speed (v₁) within a period (t₁-t₀) of 50 ms to 500 ms.

6. The method according to at least one of claims 3 to 5, **characterized in that** v₂ is in a range of 0-50 rpm, wherein particularly v₂ = 0, and/or
the first speed (v₁) is in a range of 70-100% of the maximum speed of the mixing cam (3), particularly in a range of 80 to 150 rpm.

7. The method according to at least one of the preceding claims, **characterized in that** the rotational direction of the mixing cam (3) is changed at specific intervals (Δt₂).

8. The method according to at least one of the preceding claims, **characterized in that** the speed (v₁) of the mixing cam (3) is abruptly lowered, in particular with a deceleration in a range of 2-50 rps², and/or the speed (v₂) is abruptly increased, particularly with an acceleration of 2-50 rps².

9. The method according to at least one of the preceding claims, **characterized in that** the foodstuff comprises 5% to 50% of chunky inclusions (a) in liquid (b).

10. The method according to at least one of claims 1 to 8, **characterized in that** the foodstuff comprises at least two pasty masses (a, b).

11. A filling machine for performing the method according to at least one of claims 1 to 10 with a hopper (2), a conveying mechanism for conveying the foodstuff from the hopper (2) into a filling unit (8) and a mixing cam (3) with its own drive (5), **characterized by**
a control device (10) in which at least one speed profile for the drive (5) of the mixing cam (3) is stored.

12. The filling machine (1) according to claim 11, **characterized in that** a plurality of speed profiles for different foodstuffs are stored in the control device (10).

13. The filling machine according to claim 12, **characterized in that**
the filling machine (1) comprises a device for selecting a specific speed profile and/or
a device with which the speed profile can be adjusted or adapted manually, in particular the first and/or second speed (v₁, v₂), and/or
the time interval (Δt₂) between two speed reductions to the second speed (v₂) and/or
the time interval between two speed increases to the first speed (v₁) and/or
the time period (Δt₀) in which the mixing cam is driven at the first speed (v₁) and/or
the time period (Δt₃) in which the mixing cam is driven at the second speed (v₂) or stopped and/or
the acceleration or deceleration with which the speed (v₁, v₂) is increased or lowered can be adjusted.

14. The filling machine (1) according to at least one of claims 11 to 13, **characterized in that** the mixing cam (3) comprises at least one paddle (4a, b, c) which is revolvingly circulating in the lower portion (11) of the hopper (2).

15. The method according to at least one of claims 1 to 10, **characterized in that** the time interval (Δt₂) between two abrupt speed reductions is in a range of 0.5 s to 5 s.

## Revendications

1. Procédé pour assurer le conditionnement par remplissage d'un produit alimentaire, qui comprend au moins deux composants (a, b), notamment en vue de la fabrication de saucisse,
le produit alimentaire étant introduit dans une trémie de remplissage (2) d'une machine de remplissage (1) et mélangé à l'aide d'un mélangeur à courbe de mélange (3), **caractérisé en ce que**
le mélangeur à courbe de mélange (3) est entraîné par l'intermédiaire d'un entraînement (5), qui lui est propre, à des vitesses différentes, conformément à un profil de vitesse déterminé, tandis que le produit alimentaire est extrait par refoulement de la zone inférieure de la trémie de remplissage (2) par l'intermédiaire d'un groupe de refoulement, et est conditionné par remplissage par l'intermédiaire d'un organe de remplissage (8).

2. Procédé selon la revendication 1, **caractérisé en ce que** le profil de vitesse du mélangeur à courbe de mélange (3) est indépendant du profil de vitesse du groupe de refoulement.

3. Procédé selon l'une au moins des revendications 1-2, **caractérisé en ce que** le mélangeur à courbe de mélange (3) est entraîné de manière continue avec une première vitesse (v₁) dans une première plage de vitesses, et la vitesse (v₁) est réduite, selon des intervalles (Δt₂), à une deuxième vitesse (V₂) dans une deuxième plage de vitesses, les vitesses respectant (v₂<v₁), et la première et/ou la deuxième vitesse étant constante ou bien variant respectivement dans la première ou la deuxième plage de vitesses.

4. Procédé selon l'une au moins des revendications 1-3, **caractérisé en ce que** l'on modifie les paramètres du profil de vitesses en fonction du produit alimentaire, en réglant notamment
la première et/ou la deuxième vitesse (v₁, v₂), et/ou
l'intervalle de temps (Δt₂) entre deux abaissements de vitesse à la deuxième vitesse (v₂), et/ou
l'intervalle de temps entre deux augmentations de vitesse à la première vitesse (v₁), et/ou
la durée (Δt₀) pendant laquelle le mélangeur à courbe de mélange est entraîné à la première vitesse (v₁), et/ou
la durée (Δt₃) pendant laquelle le mélangeur à courbe de mélange est entraîné à la deuxième vitesse (v₂) ou est stoppé, et/ou
l'accélération ou la décélération avec laquelle la vitesse (v₁, v₂) est augmentée ou abaissée.

5. Procédé selon la revendication 3 ou la revendication 4, **caractérisé en ce que** la première vitesse (v₁) est, dans une plage de temps (t₃-t₂) de 50 ms à 500 ms, abaissée de manière abrupte à la deuxième vitesse (v₂), et/ou la deuxième vitesse (v₂) est, dans plage de temps (t₁-t₀) de 50 ms à 500 ms, augmentée de manière abrupte à la première vitesse (v₁).

6. Procédé selon l'une au moins des revendications 3-5, **caractérisé en ce que** v₂ se situe dans une plage de 0-50 tours/min, avec notamment v₂ = 0, et/ou la première vitesse (v₁) se situe dans une plage de 70 - 100% de la vitesse maximale du mélangeur à courbe de mélange (3), notamment dans une plage de 80 à 150 tours/min.

7. Procédé selon l'une au moins des revendications précédentes, **caractérisé en ce que** le sens de rotation du mélangeur à courbe de mélange (3) est modifié dans des intervalles (Δt₂) déterminés.

8. Procédé selon l'une au moins des revendications précédentes, **caractérisé en ce que** la vitesse (v₁) du mélangeur à courbe de mélange (3) est abaissée de manière abrupte, notamment avec une décélération dans une plage de 2 - 50 tours/s², et/ou la vitesse (v₂) est augmentée de manière abrupte, notamment avec une accélération de 2 - 50 tours/s².

9. Procédé selon l'une au moins des revendications précédentes, **caractérisé en ce que** le produit alimentaire renferme 5% à 50% d'inclusions en morceaux (a) dans du liquide (b) .

10. Procédé selon l'une au moins des revendications 1-8, **caractérisé en ce que** le produit alimentaire comprend au moins deux masses pâteuses (a, b).

11. Machine de remplissage pour la mise en oeuvre du procédé selon l'une au moins des revendications 1-10, comprenant une trémie (2), un groupe de refoulement pour refouler le produit alimentaire hors de la trémie (2) dans un organe de remplissage (8), ainsi qu'un mélangeur à courbe de mélange (3) possédant son propre entraînement (5),
**caractérisée par**
un dispositif de commande (10) dans lequel est mémorisé au moins un profil de vitesses pour l'entraînement (5) du mélangeur à courbe de mélange (3).

12. Machine de remplissage (1) selon la revendication 11, **caractérisée en ce que** dans le dispositif de commande (10) sont mémorisés plusieurs profils de vitesse pour des produits alimentaires différents.

13. Machine de remplissage (1) selon la revendication 12, **caractérisée en ce que**
la machine de remplissage (1) comprend un dispositif pour sélectionner un profil de vitesses déterminé, et/ou un dispositif à l'aide duquel il est possible de régler ou adapter manuellement le profil de vitesses, notamment de régler
la première et/ou la deuxième vitesse (v₁, v₂), et/ou
l'intervalle de temps (Δt₂) entre deux abaissements de vitesse à la deuxième vitesse (v₂), et/ou
l'intervalle de temps entre deux augmentations de vitesse à la première vitesse (v₁), et/ou
la durée (Δt₀) pendant laquelle le mélangeur à courbe de mélange est entraîné à la première vitesse (v₁), et/ou
la durée (Δt₃) pendant laquelle le mélangeur à courbe de mélange est entraîné à la deuxième vitesse (v₂) ou est stoppé, et/ou
l'accélération ou la décélération avec laquelle la vitesse (v₁, v₂) est augmentée ou abaissée.

14. Machine de remplissage (1) selon l'une au moins des revendications 11-13, **caractérisée en ce que** le mélangeur à courbe de mélange (3) comporte au moins une palette (4a,b,c), qui se déplace en révolution circulaire dans la zone inférieure (11) de la trémie (2) .

15. Procédé selon l'une au moins des revendications 1-10, **caractérisé en ce que** l'intervalle de temps (Δt₂) entre deux abaissements abrupts de vitesse se situe dans une plage de 0,5 s à 5 s.
